# EUROPEAN PATENT APPLICATION

(11) **EP 4 518 015 A1**
(43) Date of publication of application: **05.03.2025**
(21) Application number: 22947586.8
(22) Date of filing: 17.08.2022
(51) Int. Cl.: H01M 50/588, H01M 50/59

(54) **BATTERY AND ELECTRIC DEVICE**

(30) Priority: 23.06.2022 CN 202221576357 U
(71) Applicant: Contemporary Amperex Technology Co., Limited, Ningde, Fujian 352100 (CN)
(72) Inventor: LI, Xing, Ningde, Fujian 352100 (CN); JIN, Haizu, Ningde, Fujian 352100 (CN); LI, Zhenhua, Ningde, Fujian 352100 (CN)
(74) Representative: Gong, Jinping
(86) International application number: PCT/CN2022/113066
(87) International publication number: WO 2023/245845

(57) **Abstract**

The present application relates to a battery and a power consuming device. The battery includes: a case with an accommodating cavity therein; several battery cells arranged in the accommodating cavity; a collection assembly, which is fitted in the accommodating cavity and is configured to collect a conductive medium ejected when each of the battery cells undergoes thermal runaway. The battery and power consuming device mentioned in the present application can prevent high-voltage ignition when battery cells undergo thermal runaway.

## Description

### Cross-Reference to Related Applications

The present application refers to Chinese patent application no. 2022215763570, filed on June 23, 2022 and entitled "BATTERY AND POWER CONSUMING DEVICE", which is incorporated herein by reference in its entirety.

### Technical Field

The present application relates to the technical field of batteries, and more particularly to a battery and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

When the thermal runaway of a battery cell in a traditional battery occurs, it is easy to cause high-voltage ignition, resulting in battery failure.

### Summary of the Invention

In view of the above problem, the present application provides a battery and a power consuming device that can prevent the battery failure caused by the high-voltage ignition when a battery cell undergoes thermal runaway, such that the battery and the power consuming device have better safety.

In a first aspect, the present application provides a battery, comprising:
a case with an accommodating cavity therein;
several battery cells arranged in the accommodating cavity; and
a collection assembly, which is arranged in the accommodating cavity and is configured to collect conductive media ejected when at least part of the battery cells undergo thermal runaway.

In the present application, the collection assembly is provided to collect conductive media ejected when at least part of the battery cells undergo thermal runaway, such that the conductive medium can be prevented from lap-jointing between the terminal posts of two adjacent battery cells, and/or between the charged housings of two adjacent battery cells, and/or between the charged housing of one battery cell of the two adjacent battery cells and the terminal post of another battery cell, etc., to form a high voltage, so as to avoid the high-voltage ignition, and therefore the safety of the battery can be improved. In addition, when a collection assembly is provided to collect a conductive medium, the temperature of the side of the battery cell where a pressure relief mechanism is provided can also be reduced, so as to improve the safety performance of the battery.

In an embodiment, the collection assembly is used to collect conductive media ejected when all of the battery cells undergo thermal runaway.

In this way, the conductive medium can be prevented from lap-jointing between the terminal posts of two adjacent battery cells, and/or between the charged housings of two adjacent battery cells, and/or between the charged housing of one battery cell of the two adjacent battery cells and the terminal post of another battery cell, etc., to form a high voltage, so as to avoid the high-voltage ignition, and therefore the safety of the battery can be improved.

In an embodiment, the collection assembly includes several collection members, and each of the collection members is used to collect a conductive medium ejected when at least one of the battery cells undergo thermal runaway.

With this design, the entire collection assembly is divided into multiple collection members, which can make the assembly and setting of the collection assembly more flexible while collecting conductive media ejected when all of the battery cells undergo thermal runaway.

In an embodiment, all of the collection members correspond to all of the battery cells one-to-one, and each of the collection members is used to collect a conductive medium ejected when the corresponding battery cell undergoes thermal runaway.

Several collection members are provided to collect a conductive medium ejected when each of the battery cells undergoes thermal runaway, such that the conductive medium can be prevented from lap-jointing between the two adjacent battery cells or between the terminal post and the end cap of the same battery to form the high-voltage ignition, so that the battery has better safety.

In an embodiment, the collection member includes a collection housing having a collection cavity and a collection port in communication with the collection cavity, wherein the collection port is configured to allow a conductive medium to pass through and be received in the collection cavity.

The collection housing is provided to collect the conductive medium when it is ejected, so as to avoid the high-voltage ignition, and therefore the safety of the battery can be improved.

In an embodiment, the collection member includes a collection housing having a collection cavity and a collection port in communication with the collection cavity, an insulation medium is provided in the collection cavity, and the collection port is configured to allow a conductive medium to pass through and enter into the collection cavity, and the insulation medium is used to wrap the conductive medium.

Due to the wrapping of the insulation medium, the conductive medium can be insulated from the outside, such that no matter whether the conductive medium leaks from the collection housing and contacts the battery cell or not, the high-voltage ignition inside the battery can be avoided, which is helpful to improve the safety of the battery.

In an embodiment, the insulation medium is configured and formed by a suspended substance that is formed by exciting and decomposing an insulation powder by a conductive medium with a temperature greater than a set threshold value.

With this design, on the one hand, the providing of external heat sources is reduced, which is convenient to reduce the manufacturing difficulty and cost of the battery; on the other hand, compared with suspended substance, the volume occupied by the insulation powder is smaller, so more insulation powder can be provided in the collection housing before the conductive medium enters into the collection housing, such that more suspended substance is formed by decomposition, and the conductive medium can be better wrapped to ensure that the conductive medium can be insulated from the outside.

In an embodiment, the mass of the insulation powder is G, each of the battery cells has a pressure relief mechanism, the cross-sectional area of the pressure relief mechanism is S, and the ratio of G to S meets the following condition: 10⁻⁴ grams/square millimeter (g/mm²) ≤ G/S ≤ 5 grams/square millimeter (g/mm²).

With the ratio of G to S meeting the following condition: 10⁻⁴ g/mm² ≤ G/S ≤ 5 g/mm², the insulation powder accommodated in the collection housing can be decomposed to form enough insulation medium for wrapping the conductive medium, thus ensuring the reliability of the battery cell in operation.

In an embodiment, the ratio of G to S meets the following condition: 10⁻³ g/mm² ≤ G/S ≤ 0.5 g/mm².

With the ratio of G to S meeting the following condition: 10⁻³ g/mm² ≤ G/S ≤ 0.5 g/mm², the insulation powder accommodated in the collection housing can be decomposed to form a sufficient amount of insulation medium for wrapping the conductive medium, thus ensuring the safety of the battery cell.

In an embodiment, the ratio of G to S meets the following condition: 0.005 g/mm² ≤ G/S ≤ 0.1 g/mm².

In this embodiment, when the conductive medium enters into the collection cavity, the insulation medium formed by decomposing the insulation powder can completely wrap the conductive medium, thus having better safety.

In an embodiment, the mass of the insulation powder is G, the working capacity of the battery cell is C, and the ratio of G to C meets the following condition: 10⁻⁴ grams/ampere hour (g/Ah) ≤ G/C ≤ 100 grams/ampere hour (g/Ah).

With the ratio of G to C meeting the following condition: 10⁻⁴ g/Ah ≤ G/C ≤ 100 g/Ah, the insulation powder accommodated in the collection housing can be decomposed to form enough insulation medium for wrapping the conductive medium, thus ensuring the safety of the battery cell.

In an embodiment, the ratio of G to C meets the following condition: 0.004 g/Ah ≤ G/C ≤ 2.2 g/Ah.

Within such a ratio range, the insulation powder accommodated in the collection housing can be decomposed to form enough insulation medium for wrapping the conductive medium, thus ensuring the safety of the battery cell.

In an embodiment, the ratio of G to C meets the following condition: 0.02 g/Ah ≤ G/C ≤ 0.43 g/Ah.

In this embodiment, when the conductive medium enters into the collection cavity, the insulation medium formed by decomposing the insulation powder can completely wrap the conductive medium, thus having better safety.

In an embodiment, the battery cell has an ejection port for ejecting the conductive medium, the distance between a plane where the collection port is located and a plane where the ejection port is located is H, and H meets the following condition: a range of 0 millimeter (mm) ≤ H ≤ 20 millimeters (mm).

Within such a range, a thermally conductive medium can enter into the collection housing at a relatively high temperature and excite the insulation powder, such that an insulation medium formed by the insulation powder can completely wrap the conductive medium, thereby ensuring the safety of the battery.

In an embodiment, H meets the following condition: a range of 0 mm ≤ H ≤ 10 mm.

With H meeting the following condition: a range of 0 mm ≤ H ≤ 10 mm, it ensures that the insulation powder can be thermally decomposed to form an insulation medium, thereby preventing the high-voltage ignition of the battery.

In an embodiment, the collection member further includes a cover, and the cover is configured to cover the collection port before the battery cell undergoes thermal runaway, so as to seal the insulation medium or the insulation powder in the collection cavity.

A cover is provided to close the collection port before the battery cell undergoes thermal runaway, so as to seal the insulation medium or the insulation powder in the collection cavity, thereby preventing the insulation powder from falling; when the battery cell undergoes thermal runaway, the cover is opened to reveal the collection port to ensure that the conductive medium can enter into the collection cavity and be collected. It can be seen that by providing a cover, it ensures that the conductive medium can be wrapped, and therefore the high-voltage ignition of the battery can be avoided.

In an embodiment, the cover is opened to reveal the collection port with the aid of the impact force of the conductive medium.

The cover is provided to open the collection port with the aid of the impact force of the conductive medium, which reduces the setting of a driving member, thereby effectively reducing the manufacturing cost and manufacturing difficulty of a battery.

In a second aspect, the present application provides a power consuming device, including a battery in the above embodiment. The battery is configured for supplying electric energy for the power consuming device.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference signs throughout the accompanying drawings. In the accompanying drawings:
FIG. 1 is a schematic structural diagram of a vehicle according to some embodiments of the present application;
FIG. 2 is an exploded view of a battery according to some embodiments of the present application;
FIG. 3 is a cross-sectional view of a battery according to some embodiments of the present application;
FIG. 4 is a cross-sectional view of a collection member in a battery shown in FIG. 3;
FIG. 5 is an exploded view of a battery cell according to some embodiments of the present application.

### List of reference signs:

1000. Vehicle;
100. Battery; 200. Controller; 300. Motor;
10. Case; 11. First portion; 12. Second portion; 13. Accommodating cavity;
20. Battery cell; 21. End cap; 22. Housing; 23. Terminal post; 24. Pressure relief mechanism; 25. Electrode assembly; 30. Collection member; 31. Collection housing; 32. Collection port; 33. Collection cavity.

### Detailed Description of Embodiments

In order to make the above objectives, features and advantages of the present application more clearly understood, particular embodiments of the present application will be described in detail below with reference to the accompanying drawings. In the following description, numerous specific details are set forth in order to provide a thorough understanding of the present application. However, the present application can be implemented in many other ways different from those described herein, and those skilled in the art can make similar improvements without departing from the essence of the present application. Therefore, the present application is not limited by the particular embodiments disclosed below.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application.

In addition, the terms "first" and "second" are used for descriptive purposes only, and cannot be construed as indicating or implying relative importance or implicitly indicating the number of technical features indicated. Therefore, the features defined with "first" and "second" may explicitly or implicitly include at least one of the features. In the description of the present application, the meaning of "a plurality of" is at least two, such as two, three and so on, unless otherwise specifically defined.

In the present application, unless otherwise explicitly specified and defined, the terms such as "mounting", "connection", "connected" and "fixing" should be interpreted broadly, for example, either fixed or detachable connection, or integration; or may be a mechanical connection or an electrical connection; or may be a direct connection or an indirect connection through an intermediate medium, or may be communication between interiors of two elements or interaction between two elements, unless it may be clearly defined otherwise. For those of ordinary skill in the art, the specific meanings of the foregoing terms in the present application may be understood according to specific circumstances.

In the present application, unless otherwise explicitly specified and defined, the expression of a first feature being "on" or "under" a second feature may be the case that the first feature is in direct contact with the second feature, or the first feature is in indirect contact with the second feature via an intermediate medium. Moreover, the first feature being "on", "above", and "over" the second feature may be the first feature being directly above or obliquely above the second feature, or simply mean that the first feature is at a higher level than the second feature. The first feature being "under", "below" and "underneath" the second feature may be the first feature being right below or obliquely below the second feature, or only means that the level height of the first feature being less than that of the second feature.

At present, from the perspective of the development of the market situation, batteries are used more and more widely. The batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of batteries, the market demand for the batteries is also expanding.

The applicant has noted that during actual use, when the battery cell in a battery undergoes thermal runaway, it is easy to cause high-voltage ignition of the battery, resulting in battery failure.

With careful research by the applicant, it is found that one of the reasons leading to high-voltage ignition of a battery lies in that when a battery cell undergoes thermal runaway, a conductive medium ejected from the inside of the battery cell can easily lap-joint between the terminal post and the end cap of the same battery cell, so that both the shell and the end cover are charged; and/or the conductive medium lap-joints between the two charged end covers or the two charged housings, so that two adjacent battery cells are connected in series; and/or the conductive medium lap-joints between the terminal posts of two adjacent battery cells, so that the two adjacent battery cells are connected in series, and then the battery cells connected in series are continuously connected in series via the conductive medium, which will cause high-voltage ignition and reduce the safety of the battery.

In order to alleviate the problem of high-voltage ignition caused by thermal runaway of battery cells, the applicant have conducted an intensive study and found and designed a battery, which includes a case, several battery cells and a collection assembly, all of the battery cells and the collection assembly are arranged in the case, and the collection assembly can collect conductive media ejected when at least part of the battery cells undergo thermal runaway, so as to prevent high-voltage ignition caused by the lap-joint of the conductive medium and improve the reliability and service life of the battery in operation.

The battery disclosed in an embodiment of the present application may be used in, but not limited to, a power consuming device such as a vehicle, a ship or an aircraft. A power supply system, which is provided with the power consuming device composed of the battery, etc. disclosed in the present application, may be used, which is beneficial to reducing the risk of high-voltage ignition of the battery and improving the safety and service life of the battery.

The embodiments of the present application provide a power consuming device using a battery as a power supply. The power consuming device may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

For ease of description, an example in which a power consuming device according to an embodiment of the present application refers to a vehicle is used for description in the following embodiments.

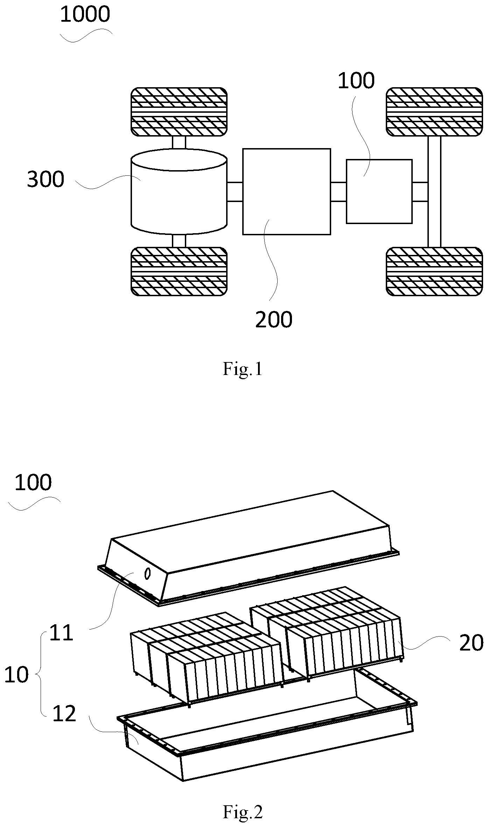

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, or an extended-range vehicle, etc. A battery is provided inside the vehicle 1000, and the battery may be provided at the bottom, the front or the back of the vehicle 1000. The battery may be used to supply power to the vehicle 1000. For example, the battery may be used as a power supply for operating the vehicle 1000. The vehicle 1000 may further include a controller 200 and a motor 300. The controller 200 is used to control the battery to supply power to the motor 300, for example, to meet working power requirements during starting, navigation and traveling of the vehicle 1000.

In some embodiments of the present application, the battery not only may serve as an operating power source of the vehicle 1000, but also may serve as a driving power source of the vehicle 1000, thus replacing or partially replacing fuel or natural gas to provide driving power for the vehicle 1000.

Please refer to FIGS 2, 3 and 4. The battery 100 includes a case 10, a collection assembly and several battery cells 20, wherein the case 10 has an accommodating cavity 13, and the collection assembly and the several battery cells 20 are all arranged in the accommodating cavity 13, and the collection assembly is configured to collect conductive media ejected when at least part of the battery cells 20 undergo thermal runaway.

The case 10 is used to provide an accommodating space for the battery cells 20 and the collection assembly, and the case 10 may be of various structures. In some embodiments, the case 10 may include a first portion 11 and a second portion 12. The first portion 11 and the second portion 12 covers each other, and the first portion 11 and the second portion 12 jointly define a accommodating cavity 13 for accommodating the battery cell 20. The second portion 12 may be of a hollow structure with one end open, the first portion 11 may be of a plate-like structure, and the first portion 11 covers an open side of the second portion 12 such that the first portion 11 and the second portion 12 jointly define the accommodating cavity 13; and the first portion 11 and the second portion 12 may also each be of a hollow structure with one side open, and an open side of the first portion 11 covers an open side of the second portion 12. Of course, the case 10 formed by the first portion 11 and the second portion 12 may be of various shapes, such as a cylinder and a cuboid.

In the battery 100, a plurality of battery cells 20 may be provided. The plurality of battery cells 20 may be in series connection, in parallel connection, or in parallel-series connection. The parallel-series connection means that some of the plurality of battery cells 20 are connected in series and some are connected in parallel. The plurality of battery cells 20 may be directly in series connection or parallel connection or series-parallel connection, and then a unit composed of the plurality of battery cells 20 is accommodated in the accommodating cavity 13 of the case 10. Of course, the battery 100 may also be a unit accommodated in the case 10 that is formed by firstly connecting a plurality of battery cells 20 in series or in parallel or in series-parallel to form a plurality of battery modules, and then connecting the plurality of battery modules in series or in parallel or in series-parallel. The battery 100 may further include other structures. For example, the battery 100 may further include a bus component for achieving electrical connections between the plurality of battery cells 20.

Each battery cell 20 may be a secondary battery or a primary battery; or may be a lithium-sulfur battery, a sodium-ion battery, or a magnesium-ion battery, but is not limited thereto. The battery cell 20 may be in the shape of a cylinder, a flat body, a cuboid, etc.

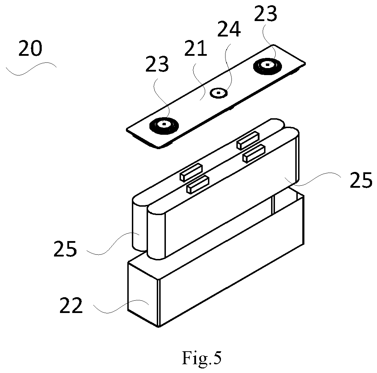

Referring to FIG. 5, the battery cell 20 refers to a minimum unit that constitutes a battery 100. As shown in FIG. 5, the battery cell 20 includes an end cap 21, a housing 22, an electrode assembly 25 and other functional components.

The end cap 21 refers to a component that covers an opening of the housing 22 to isolate the internal environment of the battery cell 20 from the external environment. Without limitation, the shape of the end cap 21 may be adapted to the shape of the housing 22 to match the housing 22. In some embodiments, the end cap 21 may be made of a material (for example, an aluminum alloy) with a certain hardness and strength. In this way, the end cap 21 is less prone to deformation when subjected to compression and collision, so that the battery cell 20 may have a higher structural strength and the safety performance can also be improved. Functional components, such as terminal posts 23, may be provided on the end cap 21. The terminal posts 23 may be used for electrical connection with the electrode assembly 25 for outputting or inputting electric energy of the battery cell 20. In some embodiments, the end cap 21 may also be provided with a pressure relief mechanism 24 for releasing the internal pressure when the internal pressure or temperature of the battery cell 20 reaches a threshold value. The end cap 21 may also be made of various materials, such as copper, iron, aluminum, stainless steel, an aluminum alloy, plastic, etc., which will not be specially limited in the embodiments of the present application.

The housing 22 is an assembly that is used to fit with the end cap 21 so as to create the internal environment of the battery cell 20, wherein the created internal environment may be used for accommodating the electrode assembly 25, an electrolyte and other components. The housing 22 and the end cap 21 may be separate components, the housing 22 may be provided with an opening, and the internal environment of the battery cell 20 is formed by making the end cap 21 cover the opening at the opening. Without limitation, the end cap 21 and the housing 22 may also be integrated with each other. Specifically, the end cap 21 and the housing 22 may form a common connection face before other components are inserted into the housing. When the interior of the housing 22 needs to be packaged, the end cap 21 then covers the housing 22. The housing 22 may have various shapes and various sizes, for example, in the form of a cuboid, a cylinder, a hexagonal prism, etc. Specifically, the shape of the housing 22 may be determined depending on the specific shape and size of the electrode assembly 25. The housing 22 may be made of various materials, such as copper, iron, aluminum, stainless steel, an aluminum alloy, plastic, etc., which is not particularly limited in the embodiments of the present application.

The electrode assembly 25 is a component where an electrochemical reaction occurs in the battery cell 20. The housing 22 may include one or more electrode assemblies 25 therein. The electrode assembly 25 is mainly formed by winding or stacking a positive electrode plate and a negative electrode plate, and a separator is generally provided between the positive electrode plate and the negative electrode plate. Both the positive electrode plate and the negative electrode plate include current collectors and active substance layers arranged on the current collectors. The active substance layer on the positive electrode plate and the active substance layer on the negative electrode plate react with the electrolyte to achieve charging and discharging.

The collection assembly is arranged in the accommodating cavity 13 and is used to collect conductive media ejected from the pressure relief mechanism 24 when at least part of the battery cells 20 undergo thermal runaway. The conductive medium may be composed of a conductive powder formed by the active substance on the active substance layer in the positive electrode plate or negative electrode plate at a high temperature, or it may also be composed of a conductive powder formed by the substance on the current collector in the positive electrode plate or negative electrode plate at a high temperature.

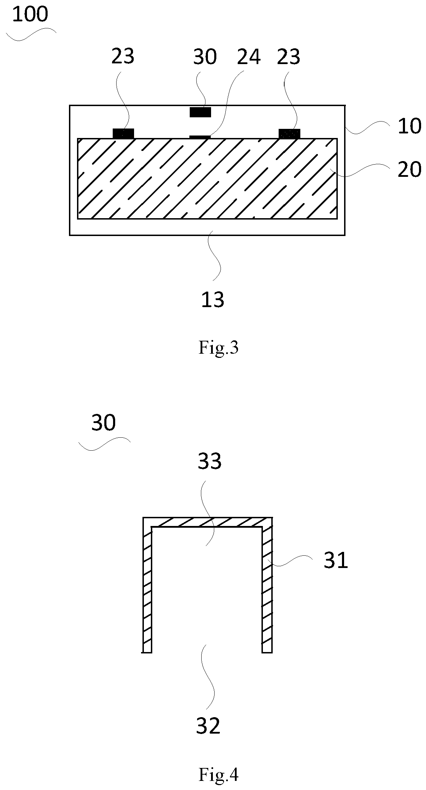

Please refer to FIG. 3 again and also refer to FIG. 5, in some embodiments, the collection assembly may be of various structures. In some embodiments, the collection assembly is a whole and arranged on the side of the pressure relief mechanism 24 of a part of the battery cells 20 for collecting conductive media ejected by a part of the battery cells 20. In some other embodiments, the collection assembly may also include multiple collection units. All of the collection units correspond to all of the battery cells 20 one-to-one, and each collection unit is located on the side of the corresponding battery cell 20 where the pressure relief mechanism 24 is provided and used to collect a conductive medium ejected by the corresponding battery cell 20. Of course, the collection assembly may be of various structures, such as a disk, a case, etc.

In the present application, the collection assembly is provided to collect conductive media ejected when at least part of the battery cells 20 undergo thermal runaway, such that the conductive medium can be prevented from lap-jointing between the terminal posts 23 of two adjacent battery cells 20, and/or between the charged housings 22 of two adjacent battery cells 20, and/or between the charged housing 22 of one battery cell 20 of the two adjacent battery cells 20 and the terminal post 23 of another battery cell 20, etc., to form a high voltage, so as to avoid the high-voltage ignition, and therefore the safety of the battery 100 can be improved. In addition, the collection assembly is provided to collect the conductive medium, the temperature of the side of the battery cell 20 where a pressure relief mechanism 24 is provided can also be reduced, so as to improve the safety performance of the battery 100.

In some embodiments of the present application, the collection assembly is used to collect conductive media ejected when all of the battery cells 20 undergo thermal runaway.

That is to say, a conductive medium ejected when any one of the battery cells 20 undergoes thermal runaway can be collected by the collection assembly.

In this way, the conductive medium can be prevented from lap-jointing between the terminal posts 23 of two adjacent battery cells 20, and/or between the charged housings 22 of two adjacent battery cells 20, and/or between the charged housing 22 of one battery cell 20 of the two adjacent battery cells 20 and the terminal post 23 of another battery cell 20, etc., to form a high voltage, so as to avoid the high-voltage ignition, and therefore the safety of the battery 100 can be improved.

Referring to FIG. 3 and FIG. 4 together, in some embodiments of the present application, the collection assembly includes several collection members 30, and each of the collection members 30 is used to collect a conductive medium ejected when at least one of the battery cells 20 undergoes thermal runaway.

In some embodiments, each of the collection members 30 can be used to collect a conductive medium ejected when one of the battery cells 20 undergoes thermal runaway, or conductive media ejected when a plurality of battery cells 20 undergo thermal runaway. All of the collection members 30 are fitted to collect conductive media ejected when all of the battery cells 20 undergo thermal runaway.

With this design, the entire collection assembly is divided into multiple collection members 30, which can make the assembly and setting of the collection assembly more flexible while collecting conductive media ejected when all of the battery cells 20 undergo thermal runaway.

In some embodiments of the present application, all of the collection members 30 correspond to all of the battery cells 20 one-to-one, and each of the collection members 30 is used to collect a conductive medium ejected when the corresponding battery cell 20 undergoes thermal runaway.

It can be understood that the collection member 30 is the above collection unit.

Specifically, each collection member 30 is arranged on the side of the corresponding battery cell 20 where the pressure relief mechanism 24 is provided, and is used to collect a conductive medium ejected from the pressure relief mechanism 24. In some embodiments, each collection member 30 is located on the upper side of the corresponding battery cell 20 and is aligned with the pressure relief mechanism 24.

In some embodiments, the collection member 30 may be cylindrical, conical, cubic, etc., and the specific shape thereof is not limited herein, as long as there is space within the collection member 30 for collecting the conductive medium.

When the battery cell 20 undergoes thermal runaway, the conductive medium formed inside the battery cell 20 will be ejected from the pressure relief mechanism 24 of the battery cell 20. Several collection members 30 are provided to collect a conductive medium ejected when each of the battery cells 20 undergoes thermal runaway, such that the conductive medium can be prevented from lap-jointing between the two adjacent battery cells 20, or between the terminal post 23 and the end cap 21 of the same battery 100 to form the high-voltage ignition, so that the battery 100 has better safety.

In some embodiments of the present application, the collection member 30 includes a collection housing 31 having a collection cavity 33 and a collection port 32 in communication with the collection cavity 33, wherein the collection port 32 is configured to allow the conductive medium to pass through and be received in the collection cavity 33.

For example, a door can be provided on each of the collection members 30, and after the conductive medium is received in the collection cavity 33, the door is closed to cover the collection port 32, such that the collection port 32 can remain in the collection cavity 33. When the battery cell 20 undergoes thermal runaway, the door can be opened or closed to reveal or cover the collection port 32, but it must be ensured that when the battery cell 20 undergoes thermal runaway, the collection port 32 can be revealed.

In some embodiments, the collection housing 31 may be cylindrical, conical, cubic, etc. with an opening.

In some embodiments, the collection housing 31 may have low-melting point insulation materials such as PET, PP, and PE as the housing, with a melting point r ≤ 1000°C, and in some embodiments, the melting point r ≤ 200°C. Materials with lower melting points have lower costs, so as to reduce the manufacturing cost of the battery 100. However, it is necessary to ensure that the collection housing 31 can maintain its shape and can collect the conductive medium before the collection housing 31 collects the conductive medium.

In some embodiments, the collection housing 31 may be a separate housing structure, which can accommodate the conductive medium in its collection cavity 33, or can also insulate the collected conductive medium before releasing it.

The collection housing 31 is provided to collect the conductive medium when it is ejected, so as to avoid the high-voltage ignition, and therefore the safety of the battery 100 can be improved.

In some embodiments of the present application, the collection member 30 includes a collection housing 31 having a collection cavity 33 and a collection port 32 in communication with the collection cavity 33, an insulation medium is provided in the collection cavity 33, and the collection port 32 is configured to allow a conductive medium to pass through and enter into the collection cavity 33, and the insulation medium is used to wrap the conductive medium.

In the collection cavity 33, the insulation medium is a suspended substance, which can exist in the collection housing 31 before the conductive medium enters into the collection housing 31, or it can also be formed by thermal decomposition of the insulation powder during the process of the conductive medium entering the collection housing 31. In some embodiments, the heat source of the insulation powder may be a conductive medium or other external heat sources.

After the conductive medium enters into the collection housing 31, the insulation medium wraps the conductive medium to achieve insulation treatment of the conductive medium.

Due to the wrapping of the insulation medium, the conductive medium can be insulated from the outside, such that no matter whether the conductive medium leaks from the collection housing 31 and contacts the battery cell 20 or not, high-voltage ignition inside the battery 100 can be avoided, which is helpful to improve the safety of the battery 100.

In some embodiments of the present application, the insulation medium is configured and formed by a suspended substance that is formed by exciting and decomposing an insulation powder by a conductive medium with a temperature greater than a set threshold value.

That is to say, before the conductive medium enters into in the collection housing 31, the collection housing 31 accommodates the insulation powder. When the conductive medium enters into the collection housing 31, the insulation powder can absorb the heat of the conductive medium and be decomposed to form an insulation medium that can wrap the conductive medium.

The insulation powder may be one or more of KHCO₃ (potassium bicarbonate), NH₄H₂PO₄ (ammonium dihydrogen phosphate), NaHCO₃ (sodium bicarbonate), K₂CO₃ (potassium carbonate), (NH₄)₂SO₄ (ammonium sulfate), NH₄HSO₄ (ammonium bisulfate), K₄Fe(CN)₆·3H₂O (potassium ferricyanide trihydrate), Na₂CO₃ (sodium carbonate), and ammonium phosphate. Each of the KHCO₃(potassium bicarbonate), NH₄H₂PO₄ (ammonium dihydrogen phosphate), NaHCO₃(sodium bicarbonate), K₂CO₃ (potassium carbonate), (NH₄)₂SO₄ (ammonium sulfate), NH₄HSO₄ (ammonium bisulfate), K₄Fe(CN)₆·3H₂O (potassium ferricyanide trihydrate), Na₂CO₃ (sodium carbonate) and ammonium phosphate can be decomposed under the excitation of the conductive medium to form a suspended substance formed by mixing particles and gas.

For example, under thermal conditions, the chemical formulae for the thermal decomposition of KHCO₃ (potassium bicarbonate), NaHCO₃ (sodium bicarbonate), K₂CO₃ (potassium carbonate), (NH₄)₂SO₄ (ammonium sulfate), and Na₂CO₃ (sodium carbonate) are as follows:

2KHCO₃ = K₂CO₃ + CO₂↑ + H₂O;

2NaHCO₃ = Na₂CO₃ + CO₂↑ + H₂O;

K₂CO₃ = K₂O + CO₂↑;

3(NH₄)₂SO₄ = 4NH₃ ↑ + 3SO₂ ↑ + N₂ ↑ + 6H₂O;

Na₂CO₃ == Na₂O + CO₂↑.

With this design, on the one hand, the providing of external heat sources is reduced, which is convenient to reduce the manufacturing difficulty and cost of the battery 100; on the other hand, compared with suspended substance, the volume occupied by the insulation powder is smaller, so more insulation powder can be provided in the collection housing 31 before the conductive medium enters into the collection housing 31, such that more suspended substance is formed by decomposition, and the conductive medium can be better wrapped to ensure that the conductive medium can be insulated from the outside.

In some embodiments of the present application, the mass of the insulation powder is G, each of the battery cells 20 has a pressure relief mechanism 24, the cross-sectional area of the pressure relief mechanism 24 is S, and the ratio of G to S meets the following condition: 10⁻⁴ grams/square millimeter (g/mm²) ≤ G/S ≤ 5 grams/square millimeter (g/mm²).

The cross-sectional area of the pressure relief mechanism 24 refers to the area of the cross-section of the pressure relief mechanism 24 arranged in parallel with the end cover 21. Generally, the cross-sectional area of the pressure relief mechanism 24 is positively related to the working capacity C of the battery cell 20. The greater the working capacity C of the battery cell 20, the more gas is generated during the working process, and correspondingly, the larger the cross-sectional area of the pressure relief mechanism 24 should be. Then, when this battery cell 20 undergoes thermal runaway, the larger the volume of the conductive medium ejected, the greater the demand for the insulation medium in the collection housing 31 for wrapping the conductive medium.

With the ratio of G to S meeting the following condition: 10⁻⁴ g/mm² ≤ G/S ≤ 5 g/mm², the insulation powder accommodated in the collection housing 31 can be decomposed to form enough insulation medium for wrapping the conductive medium, thus ensuring the reliability of the battery cell 20 in operation.

In some embodiments of the present application, the ratio of G to S meets the following condition: 10⁻³ g/mm² ≤ G/S ≤ 0.5 g/mm².

With the ratio of G to S meeting the following condition: 10⁻³ g/mm² ≤ G/S ≤ 0.5 g/mm², the insulation powder accommodated in the collection housing 31 can be decomposed to form a sufficient amount of insulation medium for wrapping the conductive medium, thus ensuring the safety of the battery cell 20.

In some embodiments of the present application, the ratio of G to S meets the following condition: 0.005 g/mm² ≤ G/S ≤ 0.1 g/mm².

In this embodiment, when the conductive medium enters into the collection cavity 33, the insulation medium formed by decomposing the insulation powder can completely wrap the conductive medium, thus having better safety.

In some embodiments of the present application, the mass of the insulation powder is G, the working capacity of the battery cell 20 is C, and the ratio of G to C meets the following condition: 10⁻⁴ grams/ampere hour (g/Ah) ≤ G/C ≤ 100 grams/ampere hour (g/Ah).

The working capacity refers to the capacity of the battery cell 20 during operation, which may be the initial capacity or may be less than the initial capacity. It can be determined that as the usage time of the battery cell 20 is extended, the working capacity of the battery cell 20 gradually decreases. The initial capacity refers to the capacity that the battery cell 20 has before it is used.

Generally, the greater the working capacity C of the battery cell 20, the larger the volume of the conductive medium ejected by this battery cell 20 when it undergoes thermal runaway, and the greater the demand for the insulation medium in the collection housing 31 for wrapping the conductive medium.

With the ratio of G to C meeting the following condition: 10⁻⁴ g/Ah ≤ G/C ≤ 100 g/Ah, the insulation powder accommodated in the collection housing 31 can be decomposed to form enough insulation medium for wrapping the conductive medium, thus ensuring the safety of the battery cell 20.

In some embodiments of the present application, the ratio of G to C meets the following condition: 0.004 g/Ah ≤ G/C ≤ 2.2 g/Ah.

Within such a ratio range, the insulation powder accommodated in the collection housing 31 can be decomposed to form enough insulation medium for wrapping the conductive medium, thus ensuring the safety of the battery cell 20.

In some embodiments of the present application, the ratio of G to C meets the following condition: 0.02 g/Ah ≤ G/C ≤ 0.43 g/Ah.

In this embodiment, when the conductive medium enters into the collection cavity 33, the insulation medium formed by decomposing the insulation powder can completely wrap the conductive medium, thus having better safety.

In some embodiments of the present application, the battery cell 20 has an ejection port for ejecting the conductive medium, the distance between a plane where the collection port 32 is located and a plane where the ejection port is located is H, and H meets the following condition: a range of 0 millimeter (mm) ≤ H ≤ 20 millimeters (mm).

When the battery cell 20 undergoes thermal runaway, the conductive medium ejected from the ejection port directly enters into the collection housing 31 through the collection port 32 and allows the insulation powder to be thermally decomposed to form an insulation medium. If the collection port 32 is far away from the ejection port, the conductive medium entering into the collection housing 31 may have a low temperature and be unable to excite the insulation powder, resulting in the failure of insulation medium formation.

In the present application, H meets the following condition: a range of 0 mm ≤ H ≤ 20 mm, within such a range, a thermally conductive medium can enter into the collection housing 31 at a relatively high temperature and excite the insulation powder, such that an insulation medium formed by the insulation powder can completely wrap the conductive medium, thereby ensuring the safety of the battery 100.

It is worth mentioning that, in order to reduce the occupied volume of the collection member 30, the collection member is generally made of materials with thin side walls. When the conductive medium is ejected and passes through the collection port 32, the distance traveled by the conductive medium in the thickness direction of the side wall of the collection member can be ignored, and it can be considered that the conductive medium has almost no heat loss on this distance.

In some embodiments of the present application, H meets the following condition: a range of 0 mm ≤ H ≤ 10 mm.

The smaller the distance between a plane where the collection port 32 is located and a plane where the ejection port is located, the higher the temperature of the conductive medium entering into the collection cavity 33 and the higher the reliability of insulation powder being thermally decomposed to form an insulation medium.

Therefore, with H meeting the following condition: a range of 0 mm ≤ H ≤ 10 mm, it ensures that the insulation powder can be thermally decomposed to form an insulation medium, thereby preventing the high-voltage ignition of the battery 100.

In some embodiments of the present application, the collection member 30 further includes a cover, and the cover is configured to cover the collection port 32 before the battery cell 20 undergoes thermal runaway, so as to seal the insulation medium or the insulation powder in the collection cavity 33.

The cover is opened or closed to reveal or cover the collection port 32. In some embodiments, the cover can be closed or opened to cover or reveal the collection port 32 under the driving of a driving member, or the cover can also be fixed at the collection port 32 and is opened to reveal the collection port 32 under the impact of the conductive medium.

A cover is provided to close the collection port 32 before the battery cell 20 undergoes thermal runaway, so as to seal the insulation medium or the insulation powder in the collection cavity 33, thereby preventing the insulation powder from falling; when the battery cell 20 undergoes thermal runaway, the cover is opened to reveal the collection port 32 to ensure that the conductive medium can enter into the collection cavity 33 and be collected. It can be seen that by providing a cover, it ensures that the conductive medium can be wrapped, and therefore the high-voltage ignition of the battery 100 can be avoided.

In some embodiments of the present application, the cover is opened to reveal the collection port 32 with the aid of the impact force of the conductive medium.

In some embodiments, the cover may be a sealing film, a sealing cover, etc.

The cover is oped to reveal the collection port 32 with the aid of the impact force of the conductive medium. For example, the cover is broken under the impact force of the conductive medium to form an opening that the conductive medium can pass through and at least partially overlaps the collection port 32. For example, the cover is separated from the collection housing 31 under the impact of the conductive medium to completely reveal the collection port 32.

After the collection port 32 is revealed, the conductive medium is wrapped by the insulation medium and then falls into the case 10 through the collection port 32. Due to the wrapping of the insulation medium, the conductive medium can be prevented from contacting the battery cell 20 in the case 10 to conduct electricity, thereby avoiding the high-voltage ignition of the battery 100.

The cover is provided to open the collection port 32 with the aid of the impact force of the conductive medium, which reduces the setting of a driving member, thereby effectively reducing the manufacturing cost and manufacturing difficulty of the battery 100.

In addition, the H above meets the following condition: a range of 0 mm ≤ H ≤ 20 mm, and in some embodiments, H meets the following condition: a range of 0 ≤ H ≤ 10 mm; therefore,it can also be ensured that the cover can be opened to reveal the collection port 32 with the help of the impact force of the conductive medium within such ranges.

According to some embodiments of the present application, the present application further provides a power consuming device, including the battery 100 according to any one of the above embodiments. The battery 100 is used to provide electric energy for the power consuming device.

The power consuming device may be any one of the foregoing devices or systems using the battery 100.

According to some embodiments of the present application, please refer to FIGS 2 to 4, the present application provides a battery 100. The battery 100 includes a case 10, several battery cells 20 and a collection assembly, wherein the collection assembly and all of the battery cells 20 are arranged in the accommodating cavity 13, and the collection assembly includes several collection members 30 corresponding to all of the battery cells 20 one-to-one, and each collection member 30 is configured to collect a conductive medium ejected when the corresponding battery cell 20 undergoes thermal runaway. The collection member 30 includes a collection housing 31 and a cover, the collection housing 31 has a collection cavity 33 and a collection port 32 in communication with the collection cavity 33, and an insulation powder is provided in the collection cavity 33, which is configured to be decomposed under the excitation of a conductive medium to form an insulation medium capable of wrapping the conductive medium. The cover is configured to cover the collection port 32 before the battery cell 20 undergoes thermal runaway, and the cover is opened to reveal the collection port 32 with the aid of the impact force of the conductive medium.

When the battery cell 20 undergoes thermal runaway and ejects an conductive powder, the cover is opened to reveal the collection port 32 with the aid of the impact force of the conductive medium, such that the conductive medium can enter into the collection cavity 33. Furthermore, the insulation powder absorbs the heat of the conductive medium and is decomposed to form an insulation medium capable of wrapping the conductive medium, and then the insulation medium wraps the conductive medium and falls from the inside of the collection member 30 to the outside. In such a battery 100, the conductive medium is wrapped and cannot come into contact with the housing 22, the end over 21 and the terminal post 23, thereby preventing the battery cells 20 from being connected in series to form high-voltage ignition, and therefore the safety of the battery 100 can be improved.

The various technical features of the above examples can be combined in any manner, and in order to simplify the description, not all possible combinations of the various technical features of the above examples are described. However, the technical features should be considered to be within the scope of the description in the description, as long as there is no conflict between the combinations of the technical features.

The embodiments described above merely illustrate several implementations of the present application and are described relatively specifically and in detail, but should not be construed as limiting the patent scope of the present application. It should be noted that those of ordinary skill in the art can make some variations and improvements without departing from the concept of the present application, and the variations and improvements fall within the scope of protection of the present application.

## Claims

1. A battery, comprising:
a case (10) with an accommodating cavity (13) therein;
several battery cells (20) arranged in the accommodating cavity (13); and
a collection assembly, which is arranged in the accommodating cavity (13) and is configured to collect conductive media ejected when at least part of the battery cells (20) undergo thermal runaway.

2. The battery according to claim 1, wherein the collection assembly is used to collect conductive media ejected when all of the battery cells (20) undergo thermal runaway.

3. The battery according to claim 2, wherein the collection assembly includes several collection members (30), and each of the collection members (30) is used to collect a conductive medium ejected when at least one of the battery cells (20) undergoes thermal runaway.

4. The battery according to claim 3, wherein all of the collection members (30) correspond to all of the battery cells (20) one-to-one, and each of the collection members (30) is used to collect a conductive medium ejected when the corresponding battery cell (20) undergoes thermal runaway.

5. The battery according to either of claims 3-4, wherein the collection member (30) includes a collection housing (31) having a collection cavity (33) and a collection port (32) in communication with the collection cavity (33), wherein the collection port (32) is configured to allow the conductive medium to pass through and be received in the collection cavity (33).

6. The battery according to either of claims 3-4, wherein the collection member (30) includes a collection housing (31) having a collection cavity (33) and a collection port (32) in communication with the collection cavity (33), an insulation medium is provided in the collection cavity (33), and the collection port (32) is configured to allow the conductive medium to pass through and enters into the collection cavity (33), and the insulation medium is used to wrap the conductive medium.

7. The battery according to claim 6, wherein the insulation medium is configured and formed by a suspended substance that is formed by exciting and decomposing an insulation powder by the conductive medium with a temperature greater than a set threshold value.

8. The battery according to claim 7, wherein the mass of the insulation powder is G, each of the battery cells (20) has a pressure relief mechanism (24), the cross-sectional area of the pressure relief mechanism (24) is S, and the ratio of G to S meets the following condition: 10⁻⁴ grams/square millimeter (g/mm²) ≤ G/S ≤ 5 grams/square millimeter (g/mm²).

9. The battery according to claim 8, wherein the ratio of G to S meets the following condition: 10⁻³ g/mm² ≤ G/S ≤ 0.g/mm².

10. The battery according to claim 9, wherein the ratio of G to S meets the following condition: 0.005 g/mm² ≤ G/S ≤ 0.1 g/mm².

11. The battery according to any one of claims 7-10, wherein the mass of the insulation powder is G, the working capacity of the battery cell (20) is C, and the ratio of G to C meets the following condition: 10⁻⁴ grams/ampere hour (g/Ah) ≤ G/C ≤ 100 grams/ampere hour (g/Ah).

12. The battery according to claim 11, wherein the ratio of G to C meets the following condition: 0.004 g/Ah ≤ G/C ≤ 2.2 g/Ah.

13. The battery according to claim 12, wherein the ratio of G to C meets the following condition: 0.02 g/Ah ≤ G/C ≤ 0.43 g/Ah.

14. The battery according to any one of claims 7-13, wherein the battery cell (20) has an ejection port for ejecting the conductive medium, the distance between a plane where the collection port (32) is located and a plane where the ejection port is located is H, and H meets the following condition: a range of 0 millimeter (mm) ≤ H ≤ 20 millimeters (mm).

15. The battery according to claim 14, wherein H meets the following condition: a range of 0 mm ≤ H ≤ 10 mm.

16. The battery according to any one of claims 7-15, wherein the collection member (30) further includes a cover, and the cover is configured to cover the collection port (32) before the battery cell (20) undergoes thermal runaway, so as to seal the insulation medium or the insulation powder in the collection cavity (33).

17. The battery according to claim 16, wherein the cover is opened to reveal the collection port (32) with the aid of the impact force of the conductive medium.

18. A power consuming device, comprising a battery according to any one of claims 1-17, the battery being used for supplying electric energy for the power consuming device.
